# EUROPÄISCHE PATENTANMELDUNG

(11) **EP 0 722 975 A1**
(43) Veröffentlichungstag der Anmeldung: **24.07.1996**
(21) Anmeldenummer: 95117975.3
(22) Anmeldetag: 15.11.1995
(51) Int. Cl.: C08J 9/12, B29C 44/34, B29B 7/74

(54) **Verfahren zum Lösen von Kohlendioxid in einem flüssigen Polymer**

(30) Priorität: 28.11.1994 DE 4442256
(71) Anmelder: BAYER AG, 51368 Leverkusen (DE); MASCHINENFABRIK HENNECKE GmbH, D-51379 Leverkusen (DE)
(72) Erfinder: Sulzbach, Hans-Michael, D-53639 Königswinter (DE); Raffel, Reiner, D-53721 Siegburg (DE); Ebeling, Wilfried, D-51069 Köln (DE); Eiben, Robert, Dr., D-51061 Köln (DE)
(74) Vertreter: Drope, Rüdiger, Dr.

(57) **Zusammenfassung**

Es wird ein Verfahren zum Lösen von Kohlendioxid in einem flüssigen Polymer beschrieben, wobei das flüssige Kohlendioxid bei einer Temperatur von -30 bis -5°C und das Polymer etwa bei Umgebungstemperatur bei einem Druck, der dem 1,2- bis 3-fachen des Sättigungsdampfdrucks für das zu lösende Kohlendioxid entspricht, vermischt werden.

## Beschreibung

Es wurde bereits mehrfach vorgeschlagen, Polymerschäume auf Basis von Zweikomponenten-Reaktivmischungen unter Einsatz von physikalisch gelöstem Kohlendioxid als Treibmittel herzustellen (siehe US-A 4 316 875, DE-A 26 28 785). Dabei wird das Kohlendioxid zunächst in der flüssigen Reaktivmischung bzw. in mindestens einer der Komponenten vor der Vermischung der Komponenten physikalisch unter Druck gelöst und die Reaktivmischung nach dem Austritt aus dem Mischaggregat für die Komponenten entspannt, wobei das gelöste Kohlendioxid unter Schaumbildung freigesetzt wird, und anschließend die Reaktivmischung unter Bildung eines festen Schaums ausreagiert.

Bevorzugte Zweikomponenten-Reaktivmischungen sind Polyurethan-Reaktivmischungen, die nach dem Polyisocyanat-Polyadditionsverfahren ausreagieren. Bevorzugt erfolgt dabei die Auflösung des Kohlendioxids in der Isocyanat-reaktiven Komponente, im allgemeinen der Polyol-Komponente.

Zum Lösen des Kohlendioxids in der Polyol-Komponente kann man auf verschiedene Weise vorgehen:
1. Gasförmiges Kohlendioxid wird in einen Begasungsbehälter, der die Polyolkomponente enthält, unter einem Druck, der oberhalb des Säffigungsdampfdrucks der zu lösenden Kohlendioxidmenge in dem Polymer gehalten wird, in Form feiner Kohlendioxidblasen eingebracht, wobei sich das Kohlendioxid löst. Geeignete Apparate zur Einbringung von Kohlendioxid-Bläschen sind z.B. Begasungsrührer. Das Verfahren arbeitet bei Umgebungstemperatur und relativ moderatem Druck, ist jedoch aufgrund der geringen Raum-Zeit-Ausbeute aufwendig.
2. Polyol und flüssiges Kohlendioxid werden oberhalb des kritischen Druckes für Kohlendioxid bei Umgebungstemperatur z.B. mit statischen Durchflußmischern vermischt. Das Verfahren arbeitet mit hoher Raum-Zeit-Ausbeute, da die Komponenten flüssig vermischt werden. Der Statikmischer kann in die Polyol-Zufuhrleitung zum Mischaggregat zur Vermischung der Reaktivkomponenten eingebaut werden und die Vermischung kontinuierlich in dem Maße erfolgen, wie das Polyol dem Mischaggregat für die Reaktivkomponenten zugeführt wird. Nachteilig ist allerdings der hohe erforderliche Druck von ca. 80 bar, der besondere Pump- und Förderorgane bzw. bei Vermischung der Komponenten in Niederdruck-Mischaggregaten eine anschließende Vorentspannung erfordert.

Es wurde nun gefunden, daß es gelingt, flüssiges CO₂ bei einer Temperatur von -30 bis -5°C und bei einem Druck von weit unterhalb des kritischen Druckes mit bei Umgebungstemperatur befindlichem Polyol zu vermischen und darin zu lösen, wobei die Lösung des Kohlendioxids so schnell erfolgt, daß eine Verdampfung des Kohlendioxids nicht erfolgt.

Gegenstand der vorliegenden Erfindung ist demgemäß ein Verfahren zum Lösen von Kohlendioxid in einem flüssigen Polymer in einer Konzentration von 0,2 bis 9 Gew.-% Kohlendioxid bezogen auf das Polymer, das dadurch gekennzeichnet ist, daß flüssiges Kohlendioxid mit einer Temperatur von -30 bis -5°C und das Polymer mit einer Temperatur von 10 bis 30°C bei einem Druck, der das 1,2- bis 3-fache des Sättigungsdampfdrucks (absolut) des zu lösenden Kohlendioxids in dem Polymer entspricht, vermischt werden.

Die Vermischung kann kontinuierlich in der Zuleitung für das Polymer zum Mischaggregat für die Reaktivkomponenten erfolgen, indem das flüssige Kohlendioxid in die Polyol-führende Leitung eingedüst wird. Vorzugsweise wird unmittelbar im Anschluß an die Eindüsungsstelle für das Kohlendioxid ein Statikmischer vorgesehen. Ferner kann in der Polyol-führenden Leitung ein Rühraggregat vorgesehen sein.

Die erforderliche Temperatur des Kohlendioxids und der erforderliche Druck bei der Vermischung von Kohlendioxid und Polyol ist abhängig einerseits von der zu lösenden Kohlendioxidmenge und andererseits von der Geschwindigkeit der Vermischung.

Zum Beispiel gelingt es, Kohlendioxid in einer Menge von bis zu 1 Gew.-%, bezogen auf das flüssige Polymer, durch einfaches Eindüsen von Kohlendioxid in die Polymerleitung zu lösen, wenn das Kohlendioxid bei einer Temperatur von -30 bis -20°C in das Polymer eingedüst wird, das sich bei einem Druck, der dem 2- bis 3-fachen des Sättigungsdampfdrucks befindet. Ist unmittelbar im Anschluß an die Einlaßstelle für das flüssige Kohlendioxid ein Statikmischer vorgesehen, kann die Temperatur des Kohlendioxids bis auf -5°C erhöht werden oder der Druck des Polyols auf das 1,5-fache des Sättigungsdampfdrucks erniedrigt werden, ohne das ein Verdampfen von Kohlendioxid in der Polyolleitung erfolgt.

Bevorzugt werden in der Polyolleitung Mischaggregate mit Rührer vorgesehen, besonders bevorzugt Kombinationen von Rührermischaggregaten und Statikmischern. Bevorzugt wird der Polyolstrom durch eine in der Polyolleitung vorgesehene Lochplatte vor der Vermischung mit dem flüssigen Kohlendioxid in eine Vielzahl von Einzelströmen aufgeteilt, so daß die Vermischung in eine turbulente Polyolströmung erfolgt.

Bevorzugte Aggregate zur Vermischung und Lösung von flüssigem Kohlendioxid in flüssigem Polymer werden nachfolgend anhand der beigefügten Figuren erläutert:
- Fig. 1 und Fig. 2: zeigen unterschiedliche Schnittzeichnungen durch ein erfindungsgemäßes Mischaggregat mit geradlinig geführter Polyolleitung.
- Fig. 3: zeigt ein erfindungsgemäßes Mischaggregat mit Z-förmig geführter Polyolleitung.

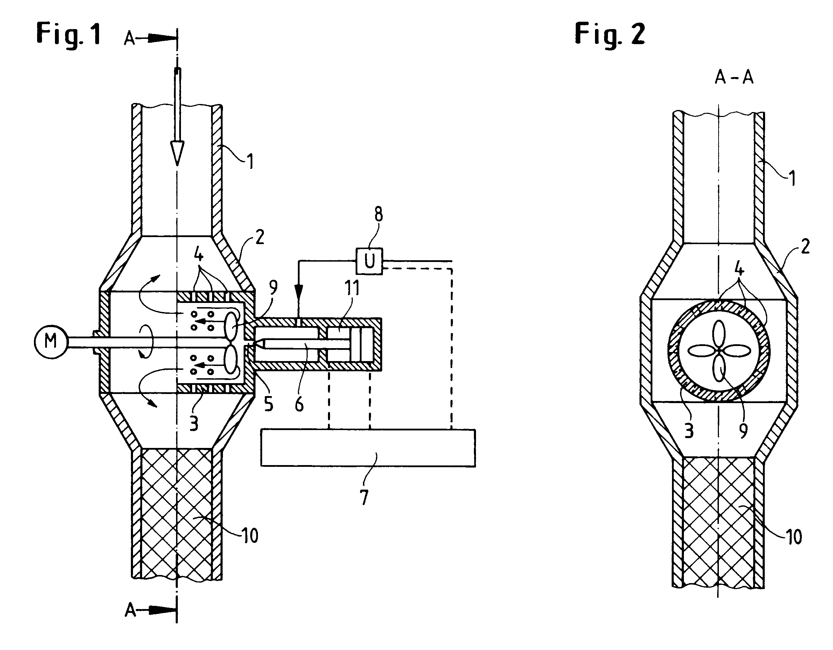

In der erfindungsgemäßen Mischvorrichtung gemäß Fig. 1 weist die Polyolleitung eine Erweiterung 2 auf, innerhalb der ein Käfig 3 vorgesehen ist, der sich z.B. über die Hälfte des Querschnitts der Erweiterung 2 erstrecken kann auf. In den Käfig 3 wird über eine Öffnung 5 flüssiges Kohlendioxid eingespeist und mittels Rührer 9 mit dem durch die Öffnungen 4 im Käfig 3 eintretenden Polyol vermischt. Zur Steuerung der Kohlendioxid-Dosierung ist vorgesehen, daß der Durchfluß durch die Öffnung 5 mittels eines Dosierstempels 6 über eine Steuereinrichtung 7 in Abhängigkeit von einem Durchflußmeßgerät 8 hydraulisch 11 gesteuert wird. Zur weiteren Vermischung kann vorgesehen sein, daß in Strömungsrichtung des Polyols im Anschluß an die Erweiterung 2 ein Statikmischer 10 vorgesehen ist.

Fig. 2 zeigt zur Erläuterung von Fig. 1 einen Schnitt A-A durch die Vorrichtung gemäß Fig. 1. Im übrigen haben die Bezugszeichen dieselbe Bedeutung wie in Fig. 1.

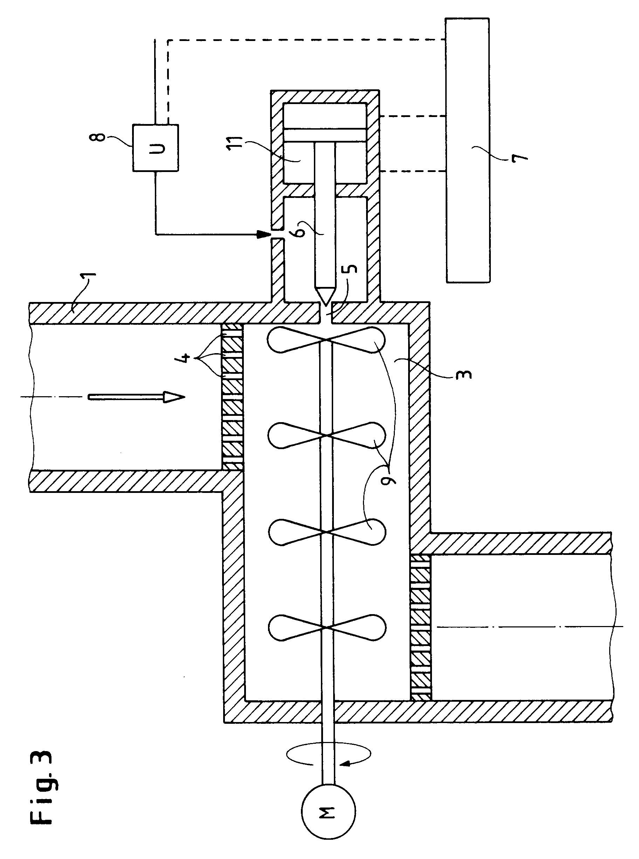

Fig. 3 zeigt eine weitere erfindungsgemäße Mischvorrichtung, wobei ein die Polyolleitung 1 seitlich versetzender Mischkäfig 3 vorgesehen ist, bei dem der Polyolstrom beim Eintritt und Austritt in eine Vielzahl von Einzelströmen mittels einer Lochplatte 4 aufgeteilt wird. Das flüssige Kohlendioxid wird wie im einzelnen zu Fig. 1 beschrieben, durch eine Öffnung 5 dosiert, und mittels Rührern 9 im Polyol verteilt.

## Patentansprüche

1. Verfahren zum Lösen von Kohlendioxid in einem flüssigen Polymer in einer Konzentration von 0,2 bis 9 Gew.-% Kohlendioxid bezogen auf das Polymer, dadurch gekennzeichnet, daß flüssiges Kohlendioxid mit einer Temperatur von -30 bis -5°C und das Polymer mit einer Temperatur von 10 bis 30°C bei einem Druck, der dem 1,2- bis 3-fachen des Sättigungsdampfdrucks (absolut) der zu lösenden Menge an Kohlendioxid in dem Polymer entspricht, vermischt werden.

2. Verfahren nach Anspruch 1, dadurch gekennzeichnet, daß als flüssiges Polymer die Isocyanat-reaktive Komponente einer Polyurethan-Reaktivmischung eingesetzt wird.

3. Verfahren nach Anspruch 2, dadurch gekennzeichnet, daß das flüssige Kohlendioxid in die Isocyanat-reaktive Komponente in der Zuleitung der Komponente zum Mischaggregat für die Herstellung der Polyurethan-Reaktivmischung eingemischt wird.
